# EUROPEAN PATENT SPECIFICATION

(11) **EP 3 386 318 B1**
(45) Date of publication and mention of the grant of the patent: **17.04.2019**
(21) Application number: 16801252.4
(22) Date of filing: 25.11.2016
(51) Int. Cl.: A23L 23/10, A23L 29/10, A23L 29/212

(54) **EMULSIFIED SAVOURY FOOD CONCENTRATE**
EMULGIERTES HERZHAFTES LEBENSMITTELKONZENTRAT
CONCENTRÉ ALIMENTAIRE GOÛTEUX ÉMULSIFIÉ

(30) Priority: 09.12.2015 WO PCT/EP2015/198575
(43) Date of publication of application: 17.10.2018
(73) Proprietor: Unilever N.V., 3013 AL Rotterdam (NL); Unilever PLC, London, Greater London EC4Y 0DY (GB)
(72) Inventor: KEIM, Florian, 74074 Heilbronn (DE); KIM, Hyun-Jung, 3133 AT Vlaardingen (NL); LEMMERS, Marc, 3133 AT Vlaardingen (NL); MELLEMA, Michel, 3133 AT Vlaardingen (NL); SAILER, Winfried, 74074 Heilbronn (NL)
(74) Representative: Tjon, Hon Kong Guno
(86) International application number: PCT/EP2016/078806
(87) International publication number: WO 2017/097607

(56) References cited:
- EP-A2- 0 835 614
- WO-A1-03/053149
- L. G. PAN, M. C. TOMÁS, M. C. AÑÓN: "Effect of Sunflower Lecithins on the Stability of Water-in-Oil and Oil-in-Water Emulsions", JOURNAL OF SURFACTANTS AND DETERGENTS, vol. 5, no. 2, April 2002 (2002-04), pages 135-143, XP002759517,
- D. M. CABEZAS, R. MADOERY, B. W. K. DIEHL, M. C. TOMÁS: "Emulsifying Properties of Different Mofified Sunflower Lecithins", J AM OIL CHEM SOC, vol. 89, 2012, pages 355-361, XP002759518,

## Description

### TECHNICAL FIELD OF THE INVENTION

The present invention relates to an emulsified savoury food concentrate that can suitably be used in the preparation of soups, sauces and gravies to provide taste and thickness in the final product. The emulsified concentrate can also be applied as a seasoning or a condiment on meal components.

The emulsified food concentrate of the present invention combines high shelf-life stability with excellent water-dispersibility and thickening properties.

The emulsified savoury food concentrate according to the invention comprises:
- 12-60 wt.% water;
- 10-70 wt.% oil, said oil being selected from triglycerides, diglycerides and combinations thereof;
- 12-40 wt.% of non-chemically modified, non-gelatinised starch;
- 0.3-1.0 mol alkalimetal cation per 100 grams of water, said alkalimetal cation being selected from Na⁺, K⁺ and combinations thereof;
- 0.6-20% of phospholipids by weight of oil, said phospholipids being selected from the group of phosphatidylcholine (PC), lysophosphatidylcholine (LPC), phosphatidylethanolamine (PE), lysophosphatidylethanolamine (LPE), phosphatidylinositol (PI), lysophosphatidylinositol (LPI) and combinations thereof; wherein ([PC]+[LPC]) / ([PI]+[LPI]) < 5;
wherein water and oil together represent at least 40 wt.% of the food concentrate and wherein water and oil are present in a weight ratio of 80:20 to 20:80.

The invention also provides a process for the manufacture of the aforementioned emulsified savoury food concentrate.

### BACKGROUND OF THE INVENTION

Industrially produced savoury products such as bouillons, soups and sauces, can be divided in ready-to-eat products and concentrated products. Ready-to-eat products merely require heating by the consumer and are quick and convenient. Concentrated products need to be diluted with hot aqueous liquid before consumption. Consequently, the levels of food ingredients in food concentrates are relatively high so that the desired concentrations of these food ingredients in the end product are obtained after the dilution.

The high concentration levels of food ingredients in savoury food concentrates can lead to a variety of problems, especially if upon dilution these concentrates have to yield a creamy product with a thick mouthfeel. In order to achieve this, the concentrate has to contain oil, emulsifier and thickening agents.

However, in order to obtain a ready-to-eat product with a nice thick, creamy consistency after 10 times dilution, thickening agent, oil and emulsifier need to be incorporated in the food concentrate in such high concentrations that it tends to become highly viscous and essentially unprocessable. Likewise, if the end product needs to contain 1.5 wt% of salt, a food concentrate designed for a 10 fold dilution will contain 15 wt% of salt. However, many thickening and emulsifying agents are not compatible with high levels of salt. Also inclusion of high levels of oil in concentrates can give rise to problems, especially in the form of oil separation (exudation) during storage. Finally, it is important that concentrates can be readily dispersed into hot water and that the oil components forms small oil droplets in the water to obtain a fine, creamy emulsion. Also this is difficult to achieve for concentrates that contain high levels of thickening agents, salt, oil and other components.

Emulsified savoury food concentrates are known in the art. EP-A 0 835 614 describes a semifluid, seasoning and/or colouring, binding foodstuff, comprising an oil-in-water emulsion including ungelatinized starch and a vegetable powder or fruit powder in a finely divided form. Example 3 describes an oil-in-water emulsion containing:
- 15% seasoning
- 10% yeast extract
- 5% salt
- 3% glutamate
- 20% vegetable extracts
- 5% spice
- 27% starch
- 15% oil.

EP-A 0 970 619 describes a concentrated soup- or sauce base, comprising fat or oil, starch-based thickener, water, egg-yolk, acetic acid, salt, and flavouring composition. The examples of this European patent application describe concentrated bases having the compositions described in the following table.

| | Composition A | Composition B |
|---|---|---|
| Vegetable oil | 20 | 40 |
| Starch | 20 | 20 |
| Flavour mix | 7 | 7 |
| Egg yolk | 2 | 4 |
| Vinegar | 2.7 | 1.5 |
| Citric acid | 0.1 | 0.1 |
| Salt | 5.0 | 5.0 |
| Water. | 43.2 | 22.4 |

The starch employed in these concentrated bases was a modified corn starch (Colfo 67 ex National Starch). The egg yolk used was a pasteurised stabilised egg yolk treated with lecithase L-10 (consisting of 92% egg yolk and 8% salt).

WO 00/70970 describes a stable acidified emulsion comprising:
- about 20% to 40% water;
- about 15% to 40% oil;
- about 25% to 65% solids, said solids including sodium chloride, emulsifier, preservative, lipophilic starch, microcrystalline cellulose, sodium stearoyl lactylate, acidulant, edible gum and heat swelling starch.

Example I of the aforementioned international patent application describes a savoury herb combination that includes a sauce component that contains:
- 40.00 wt.% water
- 15.20 wt.% liquid soybean oil
- 9.00 wt.% salt fine
- 8.34 wt.% HVP innova
- 7.00 wt.% sucrose
- 11.00 wt.% Starch-Purity 100-BG (an octenyl-succinate starch)
- 15.20 wt.% chicken fat
- 1.1 wt.% egg yolk
- 0.20 wt.% disodium salts
- 0.61 wt.% phosphoric acid
- 0.68 wt.% lactic acid
- 0.26 wt.% xanthan gum; and
- various flavour contributing components

The emulsified savoury food concentrates of the prior art suffer from a number of drawbacks. Some of these emulsified concentrates have only been prepared in the form of acidic products. Other concentrates require the use of chemically modified starches or complex manufacturing processes.

### SUMMARY OF THE INVENTION

The present invention provides an emulsified savoury food concentrate that overcomes the aforementioned drawbacks.

The emulsified savoury food concentrate of the present invention comprises:
a) 12-60 wt.% water;
b) 10-70 wt.% oil, said oil being selected from triglycerides, diglycerides and combinations thereof;
c) 12-40 wt.% of non-chemically modified, non-gelatinised starch;
d) 0.3-1.0 mol alkalimetal cation per 100 grams of water, said alkalimetal cation being selected from Na⁺, K⁺ and combinations thereof;
e) 0.6-20% of phospholipids by weight of oil, said phospholipids being selected from the group of phosphatidylcholine (PC), lysophosphatidylcholine (LPC), phosphatidylethanolamine (PE), lysophosphatidylethanolamine (LPE), phosphatidylinositol (PI), lysophosphatidylinositol (LPI) and combinations thereof; wherein ([PC]+[LPC]) / ([PI]+[LPI]) < 5;
wherein water and oil together represent at least 40 wt.% of the food concentrate and wherein water and oil are present in a weight ratio of 80:20 to 20:80.

The present invention provides an emulsified savoury food concentrate that offers the advantage that it can be readily dispersed in hot aqueous liquids. The oil and the starch contained in the concentrate assists in producing a ready-to-eat savoury product with a creamy, thick mouthfeel, especially once the starch component has been substantially gelatinised.

The emulsified concentrate of the present invention can also suitably be applied as a seasoning or a condiment on meal components.

The savoury food concentrate has excellent shelf-stability and is easy to manufacture. Furthermore, the concentrates of the present invention are designed to accommodate a variety of taste contributing components (e.g. spices, herbs, juices) to further enhance the taste contribution of the concentrate. The aforementioned advantageous properties may be realised in food concentrates of acidic pH as well as neutral pH.

The invention also provides a process of preparing the aforementioned emulsified savoury food concentrate, said process comprising:
- dispersing the phospholipids into the water to prepare a phospholipid dispersion;
- adding the oil to the phospholipid dispersion and emulsifying the combination of oil and phospholipid dispersion to prepare an emulsion;
- adding the non-chemically modified non-gelatinised starch and the salt to the emulsion.

The invention further provides a method of preparing an edible savoury product, said method comprising combining 1 part by weight of the savoury food concentrate of the present invention with at least 5 parts by weight, preferably 8-50 parts by weight of aqueous liquid.

### DETAILED DESCRIPTION OF THE INVENTION

A first aspect of the present invention relates to an emulsified savoury food concentrate comprising:
a) 12-60 wt.% water;
b) 10-70 wt.% oil, said oil being selected from triglycerides, diglycerides and combinations thereof;
c) 12-40 wt.% of non-chemically modified, non-gelatinised starch;
d) 0.1-3 mol alkalimetal cation per 100 grams of water, said alkalimetal cation being selected from Na⁺, K⁺ and combinations thereof;
e) 0.6-20% of phospholipids by weight of oil, said phospholipids being selected from the group of phosphatidylcholine (PC), lysophosphatidylcholine (LPC), phosphatidylethanolamine (PE), lysophosphatidylethanolamine (LPE), phosphatidylinositol (PI), lysophosphatidylinositol (LPI) and combinations thereof; wherein ([PC]+[LPC]) / ([PI]+[LPI]) < 5;
wherein water and oil together represent at least 40 wt.% of the food concentrate and wherein water and oil are present in a weight ratio of 80:20 to 20:80.

The term "chemically modified starch" as used herein refers to starch that has been chemically, including enzymatically, altered. Chemical modification of starch generally involves esterification, etherification or oxidation of the available hydroxyl groups on the alpha-D-glucopyranosyl units that make up the starch polymers.

The term "gelatinized starch" as used herein refers to starch that has undergone gelatinization. Starch gelatinization is a process that breaks down the intermolecular bonds of starch molecules in the presence of water and heat, allowing the hydrogen bonding sites to engage more water. This irreversibly dissolves the starch granule. Penetration of water increases randomness in the general starch granule structure and decreases the number and size of crystalline regions. Under the microscope in polarized light starch loses its birefringence and its extinction cross during gelatinization. Some types of unmodified native starches start swelling at 55 °C, other types at 85 °C. The gelatinization temperature depends on the degree of cross-linking of the amylopectin and on the presence of other components, such as salt or sugars.

The term "phospholipid" as used herein refers to a lipid comprising a glycerol bound to one or two fatty acids and a phosphate group.

Concentrations that are expressed herein by weight of oil or by weight of water, unless indicated otherwise, refer to the concentration (wt.%) calculated by weight of the total amount of oil (triglcyerides and/or diglycerides), respectively the total amount of water (H₂O) that is present in the savoury food concentrate.

Preferably, the food concentrate is water-continuous. A water-continuous concentrate offers the advantage that it is easier to disperse in water.

The savoury food concentrate of the present invention preferably contains 15-50 wt.% water, more preferably 17-45 wt.% water and most preferably 18-40 wt.% water.

As mentioned herein before, the food concentrate can have an acidic or neutral pH. Accordingly, the food concentrate typically has a pH in the range of 3.0 to 8.0. More preferably, the savoury food concentrate has pH in the range of 3.5 to 6.0. Most preferably, said pH is in the range of 4.0 to 5.5.

The oil content of the food concentrate preferably is in the range of 12 to 60 wt.%, more preferably of 15 to 50 wt.% and most preferably of 30 to 47 wt.%.

The oil contained in the savoury food concentrate may be liquid, semi solid or solid, but preferably is liquid. Preferably, the oil contained in food concentrate has a solid fat content at 20°C (N₂₀) of not more than 10%. Even more preferably, the oil has a N₂₀ of not more than 5% and most preferably the oil has a N₂₀ of 0%. The solid fat content of the oil can suitably be determined using the method described in *Animal and vegetable fats and oils* -- *Determination of solid fat content by pulsed NMR* -- *Part 1: Direct method* - ISO 8292-1:2008.

The combination of water and oil typically represent at least 40 wt.%, more preferably 50-75 wt.% and most preferably 55-70 wt.% of the food concentrate.

Water and oil are typically present in the food concentrate in a weight ratio of 28:100 to 3:1, even more preferably of 1:3 to 2:1, and most preferably of 30:70 to 1:1.

In accordance with another preferred embodiment the savoury food concentrate contains 15-40 wt.% of the non-chemically modified non-gelatinised starch, more preferably 18-35 wt.% of the non-chemically modified non-gelatinised starch.

The stability of the emulsified savoury food concentrate of the present invention critically depends on both the phospholipids component and the non-chemically modified non-gelatinised starch. Thus, the latter starch component not only contributes to the texture of the final product in which the savoury food concentrate is applied, but it also enables the manufacture of a savoury food concentrate that exhibits sufficient emulsion stability.

Native starch, e.g. native potato starch or native corn starch, is an example of a non-chemically modified non-gelatinised starch that may be employed in the food concentrate of the present invention. Also physically modified starches, such as heat-moisture treated (HMT) starches, may suitably be employed.

The food concentrate preferably contains less than 3 wt.%, more preferably less than 2 wt.% and even more preferably less than 1 wt.% of chemically modified starch. Most preferably, the food concentrate contains no chemically modified starch.

The amount of gelatinized starch in the food concentrate typically does not exceed 8% by weight of water. More preferably, the food concentrate contains 0-5% of gelatinized starch by weight of water. Even more preferably, the food concentrate contains 0-2% of gelatinized starch by weight of water. Most preferably, the food concentrate contains no gelatinized starch.

According to a particularly preferred embodiment, the non-chemically modified non-gelatinized starch in the food concentrate is selected from A-type crystalline starch, C-type crystalline starch and combinations thereof.

The concentration of the alkalimetal cation in the food concentrate preferably lies in the range of 0.4-0.8 mol per 100 grams of water, more preferably 0.45-0.7 mol per 100 grams of water.

The food concentrate typically contains 0.3-1.0 mol of chloride ions per 100 grams of water. More preferably the concentrate contains 0.4-0.8 mol, most preferably 0.45-0.7 mol chloride ions per 100 grams of water.

Typically, the food concentrate contains sodium ions and chloride ions in a molar ratio of 1:2 to 4:1, more preferably in the range of 2:3 to 2:1 and most preferably of 1:1 to 3:2.

The concentration of the alkalimetal cation per 100 grams of the total food concentrate, is typically in the range of 0.01-0.28 mol, more preferably in the range of 0.02-0.22 mol and most preferably of 0.03-0.20 mol, per 100 grams of the total food concentrate.

The combination of the non-chemically modified non-gelatinised starch, the alkali metal cations and chloride anions is preferably present in the food concentrate in a concentration of at least 80% by weight of water, more preferably of at least 90% by weight of water and most preferably of 100% to 150% by weight of water.

The combination of water, the oil, the non-chemically modified non-gelatinised starch and the alkali metal cation preferably constitutes at least 70 wt.%, more preferably at least 80 wt.% and most preferably at least 82 wt.% of the food concentrate.

The savoury food concentrate typically contains at least 1.5%, more preferably 3.0-15 % and most preferably 3.6-10 wt.% of the phospholipids by weight of oil.

The concentration of phospholipids, calculated by weight of the total food concentrate, is typically in the range of 0.7 to 5 wt.%, more preferably in the range of 1 to 4 wt.% and most preferably of 1.5 to 3 wt.%.

The inventors have found that the stability of the savoury food concentrate of the present invention is dependent on the composition of the phospholipids. According to a particularly preferred embodiment, the phospholipids composition meets the following condition: 0.4 < ([PC]+[LPC]) / ([PI]+[LPI]) < 2. Even more preferably, the phospholipids composition meets the following condition: 0.6 < ([PC]+[LPC]) / ([PI]+[LPI]) < 1.5.

Unlike some of the emulsified savoury food concentrates of the prior art, the savoury food concentrate of the present invention does not require the use of egg yolk for achieving sufficient emulsion stability. Consequently, in a preferred embodiment, the savoury concentrate contains less than 1 wt.%, more preferably less than 0.5 wt.% and most preferably no egg yolk protein.

According to yet another advantageous embodiment of the present invention the food concentrate contains at least 0.5 wt.%, more preferably 1 to 50 wt.%, even more preferably 2 to 40 wt.% and most preferably 5 to 30 wt.% of dry matter from savoury ingredients selected from herbs, spices, vegetables, meat, glutamate, citric acid, acetic acid, yeast and combinations thereof.

Another aspect of the invention relates to a process of preparing a food concentrate as defined herein, said process comprising
- dispersing the phospholipids into the water to prepare a phospholipid dispersion;
- adding the oil to the phospholipid dispersion and emulsifying the combination of oil and phospholipid dispersion to prepare an emulsion;
- adding the non-chemically modified non-gelatinised starch and the salt to the emulsion.

Yet another aspect of the present invention relates to method of preparing an edible savoury product, said method comprising combining 1 part by weight of a food concentrate as defined herein with at least 5 parts by weight, preferably 8-50 parts by weight of aqueous liquid.

Preferably, the aqueous liquid employed in the present method has a temperature of at least 50°C.

The invention is further illustrated by means of the following non-limiting examples.

### EXAMPLES

### Example 1

Emulsified savoury food concentrates were prepared on the basis of the recipes shown in Table 1.

**Table 1**

| | **Wt.%** | | | | | | |
|---|---|---|---|---|---|---|---|
| | **1** | **2** | **3** | **4** | **A** | **B** | **C** |
| Sunflower oil | 31.5 | 31.6 | 31.5 | 31.5 | 31.3 | 31.5 | 32.2 |
| Water | 31.5 | 31.6 | 31.5 | 31.5 | 31.3 | 31.5 | 32.2 |
| Salt | 10.4 | 10.4 | 10.4 | 10.4 | 10.3 | 10.4 | 10.6 |
| Corn starch | 24.6 | 24.7 | 24.6 | 24.6 | 24.4 | 24.6 | 25.1 |
| Hydrolysed liquid sunflower lecithin | 2.0 | 1.6 | | | | | |
| Hydrolysed liquid soy lecithin | | | 2.0 | | | | |
| Filtered liquid soy lecithin | | | | 2.0 | | | |
| Ethanol fractionated liquid soy lecithin | | | | | 2.7 | 2.0 | |

The ratio ([PC]+[LPC]) / ([PI]+[LPI]) of the lecithins mentioned in Table 1 are listed in Table 2

**Table 2**

| | **([PC]+[LPC]) / ([PI]+[LPI])** |
|---|---|
| Hydrolysed liquid sunflower lecithin | 1.0 |
| Hydrolysed liquid soy lecithin | 1.4 |
| Filtered liquid soy lecithin | 1.4 |
| Ethanol fractionated liquid soy lecithin | 35 |

The emulsified concentrates were prepared as follows:
- Water (20°C) was introduced into a Thermomix® blender
- Emulsifier was added and the combination was stirred for 5 minutes at speed 3
- Oil was added slowly while stirring at speed 7. After 6 minutes stirring was stopped. Temperature of the emulsion was kept below 38°C by cooling the mixing vessel
- The emulsion was further emulsified for 1 minute at speed 10
- Stirring speed was reduced to speed 3 and starch and salt were added. Stirring was continued for 1 minute. Temperature of the emulsion (35°C) was still well below starch gelatinization temperature
- The emulsions so obtained were introduced into plastic containers (40 ml per container).

The containers containing the emulsified concentrates were stored at 20°C for 7 days after which the products were visually inspected. It was found that concentrates A, B and C showed free oil on top of the product, whereas concentrates 1, 2, 3 and 4 did not show any free oil.

### Example 2

Emulsified savoury food concentrates were prepared on the basis of the recipes described in Table 3.

**Table 3**

| | **Wt.%** | | | | |
|---|---|---|---|---|---|
| | **1** | **2** | **3** | **4** | **5** |
| Sunflower oil | 18.0 | 31.0 | 31.6 | 32 | 45 |
| Water | 41.3 | 31.5 | 31.6 | 32 | 19.1 |
| Salt | 14.0 | 10.0 | 10.4 | 11 | 6 |
| HMT potato starch | 23.0 | 25 | | 25 | 25 |
| Corn starch | | | 24.7 | | |
| Hydrolysed liquid sunflower lecithin | 4.1 | 2.0 | 1.6 | 0.5 | 5 |

The emulsified concentrates were prepared as follows:
- Starch and emulsifier were dispersed in the water (20°C) using an IKA® overhead stirrer RW 27 at operating speed 2. After ten minutes stirring was stopped and the emulsion had a temperature (35°C) that was well below the starch gelatinization temperature.
- Oil was gradually added to the aqueous mixture in 1-2 minutes while stirring with an Ultra Turrax® T-25 at speed 1 (6,500 rpm)
- Salt was added and the emulsion was homogenized with the Ultra Turrax® T-25 at speed 6 (22,000 rpm). The emulsion had a temperature (30°C) that was well below the gelatinization temperature of the starch
- The emulsified products so obtained were introduced in glass containers (25 ml per container)

The containers containing the emulsified concentrates were stored at 20°C for 7 days after which the products were visually inspected. It was found that none of the concentrates 1-5 showed any free oil.

### Example 3

Emulsified savoury food concentrates were prepared on the basis of the recipes described in Table 4.

**Table 4**

| | **Wt.%** | | | | | |
|---|---|---|---|---|---|---|
| | **1** | **2** | **3** | **4** | **5** | **A** |
| Sunflower oil | 45.0 | 40.0 | 29.0 | 42.0 | 42.0 | 45.0 |
| Water | 20.0 | 17.0 | 19.0 | 18.0 | 18.0 | 20.0 |
| Salt | 6.7 | 5.7 | 6.4 | 4.5 | 6.0 | 6.7 |
| Corn starch | 20.0 | 30.0 | | | | 20.0 |
| HMT treated potato starch | | | 40.0 | 25.0 | | |
| Native potato starch | | | | | 25.0 | |
| Hydrolysed sunflower lecithin | 3.2 | 2.8 | 2.0 | 4.4 | 3.6 | |
| Ethanol fractionated soy lecithin | | | | | | 3.2 |
| Spices | 0.5 | 0.5 | 0.5 | 0.5 | | 0.5 |
| Yeast extract | 2.0 | 1.8 | 0.9 | 2.0 | | 2.0 |
| Onion powder | 1.5 | 1.5 | 1.5 | 1.5 | | 1.5 |
| Sugar | 0.5 | | | 1.4 | 5.4 | 0.5 |
| Lemon juice powder | 0.7 | 0.7 | 0.7 | 0.7 | | 0.7 |

The emulsified concentrates were prepared as follows:
- Water (20°C) was introduced into a Thermomix® blender
- Emulsifier was added and the combination was stirred for 5 minutes at speed 3
- All ingredients except for the oil, salt, starch and spices were added while mixing at speed 3 for 1 minute
- Oil was added slowly while stirring at speed 7. After 6 minutes stirring was stopped. Temperature of the emulsion was kept below 38 °C by cooling the mixing vessel
- The emulsion was further emulsified for 1 minute at speed 10
- Stirring speed was reduced to speed 3 and starch, salt and spices were added. Stirring was continued for 1 minute. Temperature of the emulsion (35°C) was still well below starch gelatinization temperature
- The emulsions so obtained were introduced into plastic containers (40 ml per container).

The containers containing the emulsified concentrates were stored at 20°C for 7 days after which the products were visually inspected. It was found that concentrate A showed free oil on top of the product, whereas concentrates 1-5 did not show any free oil.

### Example 4

Emulsified savoury food concentrates were prepared on the basis of the recipes described in Table 5. Recipe A is similar to the sauce component of the Savory Herb Combination that is described on page 14 of WO 00/70969. Recipes B and C are similar to oil in water compositions A and B that are described in the Examples of EP-A 0 970 619.

**Table 5**

| | **Wt.%** | | | |
|---|---|---|---|---|
| | **1** | **A** | **B** | **C** |
| Sunflower oil | 45.0 | 26.0 | 20.0 | 40.0 |
| Water | 20.0 | 33.0 | 43.2 | 22.4 |
| NaCl | 6.7 | 6.6 | 5.0 | 5.0 |
| Corn starch | 20.0 | | | |
| CEmTex 12688 ¹ | | 8.1 | | |
| Starch Colfo67 ² | | | 20.0 | 20.0 |
| Sunlec M | 3.15 | | | |
| Egg yolk spray dried | | 0.8 | | |
| Egg yolk hydrolysed | | | 2.0 | 4.0 |
| Sucrose | | 5.1 | | |
| Xanthan gum | | 0.2 | | |
| Phosphoric acid | | 0.4 | | |
| Lactic acid | | 0.5 | | |
| Vinegar | | | 2.7 | 1.5 |
| Citric acid | | | 0.1 | 0.1 |
| Onion powder | 5.15 | 19.3 | 7.0 | 7.0 |

| | | | | |
|---|---|---|---|---|
| ¹ E1450, OSA starch from waxy maize, ex Cargill ² E1422, modified maize starch (acetylated di-starch adipate.) ³ Hydrolysed egg yolk powder (87% hydrolysed egg yolk, 8% salt, 4% maltodextrin, 0.8-1% silica) | | | | |

The emulsions were prepared by the following procedure:
- Water (20°C) was introduced into a Thermomix® blender
- Emulsifier was added and the combination was stirred for 5 minutes at speed 3
- All ingredients except for the oil, salt, starch and spices were added while mixing at speed 3 for 1 minute
- Oil was added slowly while stirring at speed 7. After 6 minutes stirring was stopped. Temperature of the emulsion was kept below 38 °C by cooling the mixing vessel
- The emulsion was further emulsified for 1 minute at speed 10
- Stirring speed was reduced to speed 3 and starch, salt and spices were added. Stirring was continued for 1 minute. Temperature of the emulsion (35°C) was still well below starch gelatinization temperature
- The emulsions so obtained were introduced into plastic containers (40 ml per container).

Emulsion A and especially emulsion C were found to have a thick consistency that was difficult to process.

The in-use performance of the emulsions was evaluated by dispersing the emulsions in water using the following method:
- The emulsion (31g) and 250 g water (20°C) were introduced into the bowl of a Kenwood® Cooking chef major KM070
- Heating was started and the contents of the bowl were stirred at speed 1
- When a temperature of 99°C was reached, stirring was continued for 1 more minute

The hot dispersed emulsions were evaluated immediately after their preparation. Dispersed emulsion 1 had a homogeneous appearance without lumps or oil droplets. Dispersed emulsion A showed small lumps on the wall of the bowl. Dispersed emulsion B showed little oil droplets. Dispersed emulsion C contained white particles and showed small lumps at the bottom of the bowl.

### Example 5

Emulsified savoury food concentrates were prepared on the basis of the recipes described in Table 6.

**Table 6**

| | **Wt.%** | | | |
|---|---|---|---|---|
| | **1** | **A** | **B** | **C** |
| Sunflower oil | 31.5 | 60.1 | 33.5 | 62.1 |
| Water | 31.5 | 10.0 | 31.5 | 10.0 |
| Salt | 10.4 | 3,3 | 10.4 | 3.3 |
| Corn starch | 24.6 | 24.6 | 24.6 | 24.6 |
| Yeast extract, glutamate, spices etc. ¹ | | | | |
| Hydrolysed liquid sunflower lecithin | 2.0 | 2.0 | | |

The emulsified concentrates were prepared as follows:
- Water (20°C) was introduced into a Thermomix® blender
- Emulsifier was added and the combination was stirred for 3 minutes at speed 3
- Oil was added slowly while stirring at speed 7. After 6 minutes stirring was stopped. Temperature of the emulsion was kept below 38 °C by cooling the mixing vessel
- The emulsion was further emulsified for 1 minute at speed 10
- Stirring speed was reduced to speed 3 and the mixture of starch and salt was added. Stirring was continued for 1.5 minute. Temperature of the emulsion (35°C) was still well below starch gelatinization temperature
- The emulsions so obtained were introduced into plastic containers (40 ml per container).

Emulsion 1 had a creamy appearance and did not show any form of instability after production. Emulsion A showed a top layer of free oil within 10 minutes after production. Emulsion B showed phase separation with visible starch sedimentation within 30 minutes after production. Sample C showed oil separation immediately after production.

### Example 6

Emulsified savoury food concentrates were prepared on the basis of the recipes described in Table 7.

**Table 7**

| | **Wt%** | | |
|---|---|---|---|
| | **1** | **A** | **B** |
| Sunflower oil | 31.5 | 37.6 | 23.4 |
| Water | 31.5 | 37.6 | 23.4 |
| Salt | 10.4 | 12.4 | 7.7 |
| Corn starch | 24.6 | 10.0 | 44.0 |
| Hydrolysed liquid sunflower lecithin | 2.0 | 2.4 | 1.5 |

The emulsified concentrates were prepared as follows:
- Water (20°C) was introduced into a Thermomix® blender
- Emulsifier was added and the combination was stirred for 3 minutes at speed 3
- Oil was added slowly while stirring at speed 7. After 6 minutes stirring was stopped. Temperature of the emulsion was kept below 38 °C by cooling the mixing vessel
- The emulsion was further emulsified for 1 minute at speed 10
- Stirring speed was reduced to speed 3 and the mixture of starch and salt was added. Stirring was continued for 1.5 minute. Temperature of the emulsion (35°C) was still well below starch gelatinization temperature
- The emulsions so obtained were introduced into plastic containers (40 ml per container).

Emulsion 1 had a creamy appearance and did not show any form of instability after production. No significant change in appearance was observed after the emulsion had been stored under ambient conditions for 1 week.

Emulsion A was very watery after production. It showed visible different layers within 7 days after production. After 1 week of storage under ambient conditions the emulsion showed clear phase separation (a water layer and a solid sediment).

Emulsion B was a very thick product with some starch lumps and air pockets after production. The emulsion could not be poured. No significant changes in appearance were observed after 1 week storage under ambient conditions.

The cooking behaviour of the 3 emulsions was evaluated by subjecting the emulsions to the following test procedure:
- 31 grams of the emulsion was introduced into the bowl of Kenwood cooking chef KM 080. Next, 250 grams of drinking water was introduced into the same bowl. Starting temperature of the mixture was 20-22°C.
- the mixture was stirred at level 1 speed and the mixture was gradually heated to a target temperature of 100°C.
- when the temperature reached 99°C, the mixture was kept stirring for 1 more minute at level 1.
- next, the diluted and cooked products were filled into a 100 mL plastic container and the appearance of the products was evaluated.
- the products were allowed to cool down and an additional evaluation was done after 40 minutes.

The cooked product prepared with emulsion B had left starch residue in the bowl after the product had been removed therefrom. Immediately after cooking, the diluted emulsions had a similar appearance. After 40 minutes the cooked produced prepared with emulsion A showed oil droplets collecting at the surface. The cooked emulsion prepared with emulsion B had become semi-solid after it had been allowed to cool down for 40 minutes. After 40 minutes, the cooked emulsion prepared with emulsion 1 was still liquid and homogeneous.

## Claims

1. An emulsified savoury food concentrate comprising:
a) 12-60 wt.% water;
b) 10-70 wt.% edible oil, said oil being selected from triglycerides, diglycerides and combinations thereof;
c) 12-40 wt.% of non-chemically modified, non-gelatinised starch;
d) 0.3-1.0 mol alkalimetal cation per 100 grams of water, said alkalimetal cation being selected from Na⁺, K⁺ and combinations thereof;
e) 0.6-20% of phospholipids by weight of oil, said phospholipids being selected from the group of phosphatidylcholine (PC), lysophosphatidylcholine (LPC), phosphatidylethanolamine (PE), lysophosphatidylethanolamine (LPE), phosphatidylinositol (PI), lysophosphatidylinositol (LPI) and combinations thereof; wherein ([PC]+[LPC]) / ([PI]+[LPI]) < 5;
wherein water and oil together represent at least 40 wt.% of the food concentrate and wherein water and oil are present in a weight ratio of 80:20 to 20:80.

2. Food concentrate according to claim 1, wherein the oil has a solid fat content at 20°C less than 10%, preferably less than 5% and most preferably less than 1%.

3. Food concentrate according to claim 1 or 2, wherein the food concentrate contains at least 1.5%, more preferably 3.0-15 % of the phospholipids by weight of oil.

4. Food concentrate according to any one of the preceding claims, wherein 0.4 < ([PC]+[LPC]) / ([PI]+[LPI]) < 2, preferably 0.6 < ([PC]+[LPC]) / ([PI]+[LPI]) < 1.5.

5. Food concentrate according to any one of the preceding claims, wherein the combination of water, the oil, the non-chemically modified non-gelatinised starch and the alkali metal cation constitutes at least 70 wt.%, preferably at least 80 wt.% of the food concentrate.

6. Food concentrate according to any one of the preceding claims, wherein the combination of the non-chemically modified non-gelatinised starch, the alkali metal cations and chloride anions is present in the food concentrate in a concentration of at least 80% by weight of water.

7. Food concentrate according to any one of the preceding claims, wherein the concentrate contains 15-50 wt.% water, preferably 18-40 wt.% water.

8. Food concentrate according to any one of the preceding claims, wherein the concentrate contains 12-60 wt.% of the oil, preferably 15-50 wt.% of the oil.

9. Food concentrate according to any one of the preceding claims, wherein the concentrate contains 15-35 wt.% of the non-chemically modified non-gelatinised starch, preferably 18-32 wt.% of the non-chemically modified non-gelatinised starch.

10. Food concentrate according to any one of the preceding claims, wherein the combination of non-chemically modified non-gelatinised starch and the salt constitutes at least 20 wt.%, preferably at least 23 wt.% of the food concentrate.

11. Food concentrate according to any one of the preceding claims, wherein the concentrate contains at least 1 wt.% of dry matter from savoury ingredients selected from herbs, spices, vegetables, meat, glutamate, citric acid, acetic acid, yeast and combinations thereof.

12. Food concentrate according to any one of the preceding claims, wherein the food concentrate has a pH in the range of 3.0 to 8.0, preferably in the range of 3.5 to 5.0.

13. Food concentrate according to any one of the preceding claims, said concentrate comprising:
a) 15-40 wt.% water;
b) 30-47 wt.% edible oil, said oil being selected from triglycerides, diglycerides and combinations thereof;
c) 18-35 wt.% of non-chemically modified, non-gelatinised starch;
d) 0.4-0.8 mol alkalimetal cation per 100 grams of water, said alkalimetal cation being selected from Na⁺, K⁺ and combinations thereof;
e) 3.0-15% of phospholipids by weight of oil, said phospholipids being selected from the group of phosphatidylcholine (PC), lysophosphatidylcholine (LPC), phosphatidylethanolamine (PE), lysophosphatidylethanolamine (LPE), phosphatidylinositol (PI), lysophosphatidylinositol (LPI) and combinations thereof; wherein ([PC]+[LPC]) / ([PI]+[LPI]) < 5;
wherein water and oil together represent at least 50 wt.% of the food concentrate and wherein water and oil are present in a weight ratio of 1:3 to 2:1.

14. A process of preparing a food concentrate according to any one of the preceding claims, said process comprising:
• dispersing the phospholipids into the water to prepare a phospholipid dispersion;
• adding the oil to the phospholipid dispersion and emulsifying the combination of oil and phospholipid dispersion to prepare an emulsion;
• adding the non-chemically modified non-gelatinised starch and the salt to the emulsion.

15. A method of preparing an edible savoury product, said method comprising combining 1 part by weight of a food concentrate according to any one of claim 1-13 with at least 5 parts by weight, preferably 8-50 parts by weight of aqueous liquid.

## Patentansprüche

1. Emulgiertes herzhaftes Lebensmittelkonzentrat, umfassend:
a) 12-60 Gew.-% Wasser;
b) 10-70 Gew.-% Speiseöl, wobei das Öl aus Triglyceriden, Diglyceriden und Kombinationen davon ausgewählt ist;
c) 12-40 Gew.-% nicht-chemisch modifizierter, nicht-gelatinierter Stärke;
d) 0,3-1,0 mol Alkalimetallkation pro 100 Gramm Wasser, wobei das Alkalimetallkation aus Na⁺, K⁺ und Kombinationen davon ausgewählt ist;
e) 0,6-20% Phospholipide, bezogen auf das Gewicht des Öls, wobei die Phospholipide aus der Gruppe von Phosphatidylcholin (PC), Lysophosphatidylcholin (LPC), Phosphatidylethanolamin (PE), Lysophosphatidylethanolamin (LPE), Phosphatidylinositol (PI), Lysophosphatidylinositol (LPI) und Kombinationen davon ausgewählt sind, wobei ([PC]+[LPC])/([PI]+[LPI]) < 5,
wobei Wasser und Öl zusammen mindestens 40 Gew.-% des Lebensmittelkonzentrats darstellen und wobei Wasser und Öl in einem Gewichtsverhältnis von 80:20 bis 20:80 vorliegen.

2. Lebensmittelkonzentrat nach Anspruch 1, wobei das Öl einen Festfettgehalt bei 20°C von weniger als 10%, vorzugsweise weniger als 5% und höchst bevorzugt weniger als 1% aufweist.

3. Lebensmittelkonzentrat nach Anspruch 1 oder 2, wobei das Lebensmittelkonzentrat mindestens 1,5%, bevorzugter 3,0 bis 15% der Phospholipide, bezogen auf das Gewicht des Öls, enthält.

4. Lebensmittelkonzentrat nach irgendeinem der vorhergehenden Ansprüche, wobei 0,4 < ([PC]+[LPC])/([PI]+[LPI]) < 2, vorzugsweise 0,6 ([PC]+[LPC])/([PI]+[LPI]) < 1,5 ist.

5. Lebensmittelkonzentrat nach irgendeinem der vorhergehenden Ansprüche, wobei die Kombination von Wasser, dem Öl, der nicht-chemisch modifizierten, nicht-gelatinierten Stärke und dem Alkalimetallkation mindestens 70 Gew.-%, vorzugsweise mindestens 80 Gew.-% des Lebensmittelkonzentrats darstellt.

6. Lebensmittelkonzentrat nach irgendeinem der vorhergehenden Ansprüche, wobei die Kombination der nicht-chemisch modifizierten, nicht-gelatinierten Stärke, den Alkalimetall-Kationen und den Chlorid-Anionen in dem Lebensmittelkonzentrat in einer Konzentration von mindestens 80 Gewichts-% des Wassers vorliegt.

7. Lebensmittelkonzentrat nach irgendeinem der vorhergehenden Ansprüche, wobei das Konzentrat 15-50 Gew.-% Wasser, vorzugsweise 18-40 Gew.-% Wasser enthält.

8. Lebensmittelkonzentrat nach irgendeinem der vorhergehenden Ansprüche, wobei das Konzentrat 12-60 Gew.-% des Öls, vorzugsweise 15-50 Gew.-% des Öls, enthält.

9. Lebensmittelkonzentrat nach irgendeinem der vorhergehenden Ansprüche, wobei das Konzentrat 15-35 Gew.-% der nicht-chemisch modifizierten, nicht-gelatinierten Stärke, vorzugsweise 18-32 Gew.-% der nicht-chemisch modifizierten, nicht-gelatinierten Stärke enthält.

10. Lebensmittelkonzentrat nach irgendeinem der vorhergehenden Ansprüche, wobei die Kombination der nicht-chemisch modifizierten, nicht-gelatinierten Stärke und des Salzes mindestens 20 Gew.-%, vorzugsweise mindestens 23 Gew.-% des Lebensmittelkonzentrats darstellt.

11. Lebensmittelkonzentrat nach irgendeinem der vorhergehenden Ansprüche, wobei das Konzentrat mindestens 1 Gew.-% Trockenmasse an herzhaften Bestandteilen enthält, ausgewählt aus Kräutern, Gewürzen, Gemüse, Fleisch, Glutamat, Citronensäure, Essigsäure, Hefe und Kombinationen davon.

12. Lebensmittelkonzentrat nach irgendeinem der vorhergehenden Ansprüche, wobei das Lebensmittelkonzentrat einen pH in dem Bereich von 3,0 bis 8,0, vorzugsweise in dem Bereich von 3,5 bis 5,0 aufweist.

13. Lebensmittelkonzentrat nach irgendeinem der vorhergehenden Ansprüche, wobei das Konzentrat umfasst:
a) 15-40 Gew.-% Wasser;
b) 30-47 Gew.-% Speiseöl, wobei das Öl aus Triglyceriden, Diglyceriden und Kombinationen davon ausgewählt ist;
c) 18-35 Gew.-% nicht-chemisch modifizierter, nicht-gelatinierter Stärke;
d) 0,4-0,8 mol Alkalimetallkation pro 100 Gramm Wasser, wobei das Alkalimetallkation aus Na⁺, K⁺ und Kombinationen davon ausgewählt ist;
e) 3,0-15% Phospholipide, bezogen auf das Gewicht des Öls, wobei die Phospholipide aus der Gruppe von Phosphatidylcholin (PC), Lysophosphatidylcholin (LPC), Phosphatidylethanolamin (PE), Lysophosphatidylethanolamin (LPE), Phosphatidylinositol (PI), Lysophosphatidylinositol (LPI) und Kombinationen davon ausgewählt sind, wobei ([PC]+[LPC])/([PI]+[LPI]) < 5,
wobei Wasser und Öl zusammen mindestens 50 Gew.-% des Lebensmittelkonzentrats darstellen und wobei das Wasser und das Öl in einem Gewichtsverhältnis von 1:3 bis 2:1 vorliegen.

14. Verfahren zur Herstellung eines Lebensmittelkonzentrats nach irgendeinem der vorhergehenden Ansprüche, wobei das Verfahren umfasst:
• Dispergieren der Phospholipide in Wasser, um eine Phospholipid-Dispersion herzustellen;
• Zugeben des Öls zu der Phospholipid-Dispersion und Emulieren der Kombination des Öls und der Phospholipid-Dispersion, um eine Emulsion herzustellen;
• Zugeben der nicht-chemisch modifizierten, nicht-gelatinierten Stärke und des Salzes zu der Emulsion.

15. Verfahren zur Herstellung eines verzehrbaren herzhaften Produktes, wobei das Verfahren das Kombinieren von 1 Gewichtsteil eines Lebensmittelkonzentrats nach irgendeinem der Ansprüche 1-13 mit mindestens 5 Gewichtsteilen, vorzugsweise 8-50 Gewichtsteilen wässriger Flüssigkeit, umfasst.

## Revendications

1. Concentré alimentaire savoureux émulsionné comprenant :
a) 12-60 % en masse d'eau ;
b) 10-70 % en masse d'huile comestible, ladite huile étant choisie parmi des triglycérides, diglycérides et combinaisons de ceux-ci ;
c) 12-40 % en masse d'un amidon non-chimiquement modifié, non-gélatinisé ;
d) 0,3-1,0 mol de cation de métal alcalin pour 100 grammes d'eau, ledit cation de métal alcalin étant choisi parmi Na⁺, K⁺ et des combinaisons de ceux-ci ;
e) 0,6-20 % de phospholipides en masse d'huile, lesdits phospholipides étant choisis dans le groupe de phosphatidylcholine (PC), lysophosphatidylcholine (LPC), phosphatidyléthanolamine (PE), lysophosphatidyléthanolamine (LPE), phosphatidylinositol (PI), lysophosphatidylinositol (LPI) et des combinaisons de ceux-ci ; où ([PC]+[LPC])/([PI]+[LPI]) < 5 ;
où l'eau et l'huile représentent ensemble au moins 40 % en masse du concentré alimentaire et où l'eau et l'huile sont présents dans un rapport massique de 80:20 à 20:80.

2. Concentré alimentaire selon la revendication 1, où l'huile présente une teneur en graisse solide à 20°C inférieure à 10 %, de préférence inférieure à 5 % et encore mieux inférieure à 1 %.

3. Concentré alimentaire selon la revendication 1 ou 2, où le concentré alimentaire contient au moins 1,5 %, encore mieux 3,0-15 % des phospholipides en masse d'huile.

4. Concentré alimentaire selon l'une quelconque des revendications précédentes, où 0,4 < ([PC]+[LPC])/([PI]+[LPI]) < 2, de préférence 0,6 < ([PC]+[LPC])/([PI]+[LPI]) < 1,5.

5. Concentré alimentaire selon l'une quelconque des revendications précédentes, dans lequel la combinaison d'eau, de l'huile, de l'amidon non-chimiquement modifié non-gélatinisé et du cation de métal alcalin constitue au moins 70 % en masse, de préférence au moins 80 % en masse du concentré alimentaire.

6. Concentré alimentaire selon l'une quelconque des revendications précédentes, dans lequel la combinaison de l'amidon non-chimiquement modifié non-gélatinisé, des cations de métaux alcalins et des anions chlorure est présente dans le concentré alimentaire dans une concentration d'au moins 80 % en masse d'eau.

7. Concentré alimentaire selon l'une quelconque des revendications précédentes, dans lequel le concentré contient 15-50 % en masse d'eau, de préférence 18-40 % en masse d'eau.

8. Concentré alimentaire selon l'une quelconque des revendications précédentes, dans lequel le concentré contient 12-60 % en masse de l'huile, de préférence 15-50 % en masse de l'huile.

9. Concentré alimentaire selon l'une quelconque des revendications précédentes, dans lequel le concentré contient 15-35 % en masse de l'amidon non-chimiquement modifié non-gélatinisé, de préférence 18-32 % en masse de l'amidon non-chimiquement modifié non-gélatinisé.

10. Concentré alimentaire selon l'une quelconque des revendications précédentes, dans lequel la combinaison d'amidon non-chimiquement modifié non-gélatinisé et du sel constitue au moins 20 % en masse, de préférence au moins 23 % en masse du concentré alimentaire.

11. Concentré alimentaire selon l'une quelconque des revendications précédentes, dans lequel le concentré contient au moins 1 % en masse de matière sèche parmi des ingrédients savoureux choisis parmi des herbes, des épices, des légumes, de la viande, du glutamate, de l'acide citrique, de l'acide acétique, de la levure et des combinaisons de ceux-ci.

12. Concentré alimentaire selon l'une quelconque des revendications précédentes, dans lequel le concentré alimentaire présente un pH dans l'intervalle de 3,0 à 8,0, de préférence dans l'intervalle de 3,5 à 5,0.

13. Concentré alimentaire selon l'une quelconque des revendications précédentes, ledit concentré comprenant :
a) 15-40 % en masse d'eau ;
b) 30-47 % en masse d'huile comestible, ladite huile étant choisie parmi des triglycérides, diglycérides et combinaisons de ceux-ci ;
c) 18-35 % en masse d'amidon non-chimiquement modifié, non-gélatinisé ;
d) 0,4-0,8 mol de cation de métal alcalin pour 100 grammes d'eau, ledit cation de métal alcalin étant choisi parmi Na⁺, K⁺ et des combinaisons de ceux-ci ;
e) 3,0-15 % de phospholipides en masse d'huile, lesdits phospholipides étant choisis dans le groupe de phosphatidylcholine (PC), lysophosphatidylcholine (LPC), phosphatidyléthanolamine (PE), lysophosphatidyléthanolamine (LPE), phosphatidylinositol (PI), lysophosphatidylinositol (LPI) et combinaisons de ceux-ci ; où ([PC]+[LPC])/([PI]+[LPI]) < 5 ;
où l'eau et l'huile représentent ensemble au moins 50 % en masse du concentré alimentaire et où l'eau et l'huile sont présentes dans un rapport massique de 1:3 à 2:1.

14. Procédé de préparation d'un concentré alimentaire selon l'une quelconque des revendications précédentes, ledit procédé comprenant :
• la dispersion des phospholipides dans l'eau pour préparer une dispersion de phospholipide ;
• l'addition de l'huile à la dispersion de phospholipides et l'émulsification de la combinaison d'huile et dispersion de phospholipides pour préparer une émulsion ;
• l'addition de l'amidon non-chimiquement modifié non-gélatinisé et du sel à l'émulsion.

15. Procédé de préparation d'un produit savoureux comestible, ledit procédé comprenant la combinaison de 1 partie en masse d'un concentré alimentaire selon l'une quelconque des revendications 1-13 avec au moins 5 parties en masse, de préférence 8-50 parties en masse de liquide aqueux.
